# EUROPÄISCHE PATENTSCHRIFT

(11) **EP 0 592 767 B1**
(45) Veröffentlichungstag und Bekanntmachung des Hinweises auf die Patenterteilung: **17.09.1997**
(21) Anmeldenummer: 93109832.1
(22) Anmeldetag: 19.06.1993
(51) Int. Cl.: B01D 53/08

(54) **Adsorptionsvorrichtung**
Adsorber - system
Dispositif d'adsorption

(30) Priorität: 23.06.1992 DE 4220493
(43) Veröffentlichungstag der Anmeldung: 20.04.1994
(73) Patentinhaber: EGA ENTWICKLUNGSGES. F. APPARATEBAU GmbH, D-53773 Hennef (DE)
(72) Erfinder: Schmid, Christoph, D-5202 Hennef (DE); Kaiser, Jochen, D-5303 Bornheim 4 (DE)
(74) Vertreter: Neumann, Ernst Dieter, Dipl.-Ing.

(56) Entgegenhaltungen:
- EP-A- 0 225 475
- EP-A- 0 290 870
- GB-A- 2 116 869

## Beschreibung

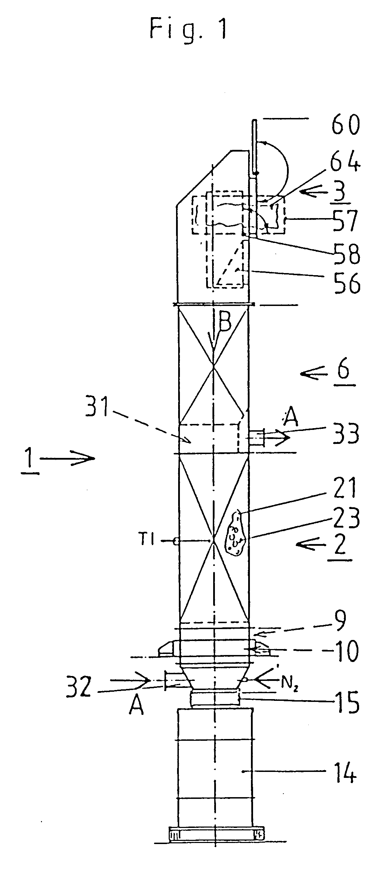

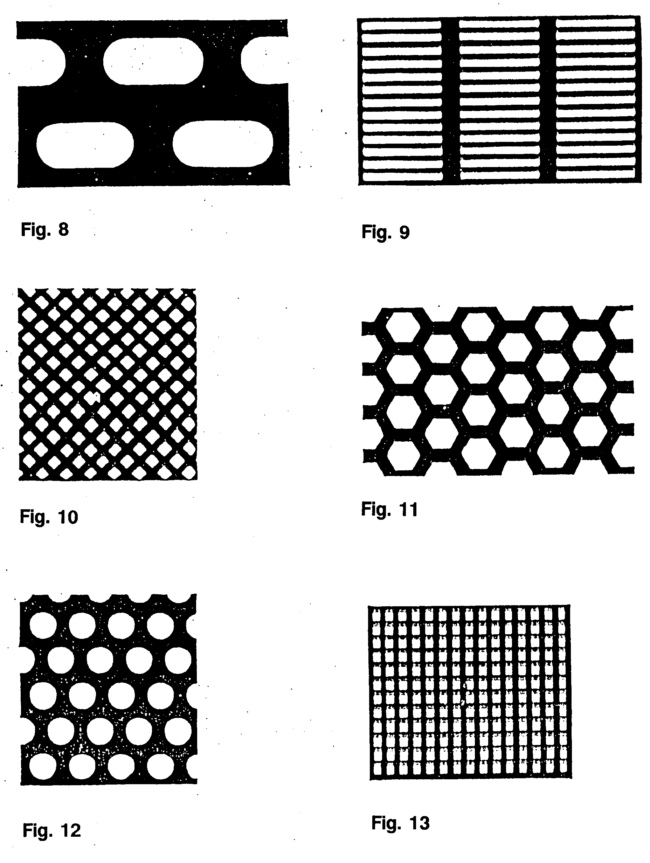

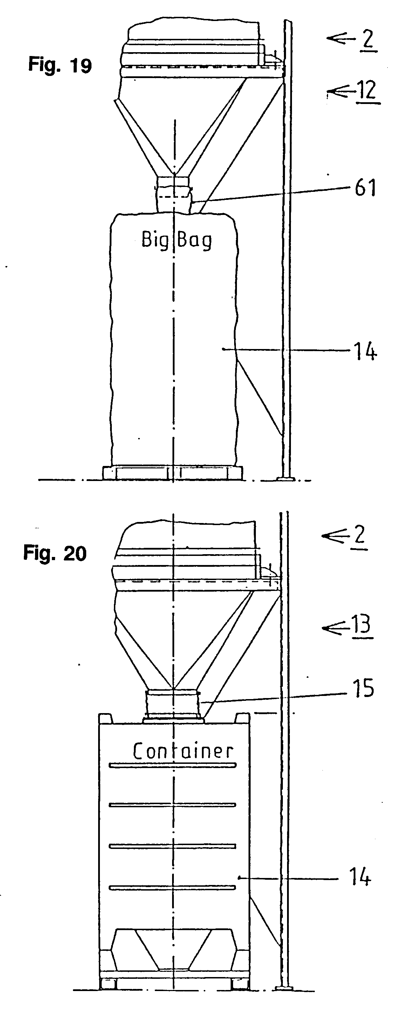

Die Erfindung betrifft einen Adsorber zum Reinigen von Gasen. Der Adsorber zeichnet sich dadurch aus, daß er aus einzelnen, der Funktion entsprechenden Bauelementen individuell, dem jeweiligen Bedarf entsprechend variabel zusammensetzbar ist.
Die Bauelemente werden durch mit Dichtungen versehene, in ihren Abmessungen und im Lochbild gleiche Flansche miteinander verbunden.
Im einzelnen besteht der Adsorber aus den nachfolgenden Bauelementen.
1. Aufgaben
   - 1.1 Als Sackaufgabe: siehe Fig.1
   - 1.2 Als Big Bag-Aufgabe: siehe Fig.8
   - 1.3 Als Container-Aufgabe: siehe Fig.9
2. Vorlagen
   - 2.1 Vorlagen für Sackaufgabe: siehe Fig.1
   - 2.2 Vorlagen für Big Bag-Aufgabe: siehe Fig.8
   - 2.3 Vorlagen für Container-Aufgabe: siehe Fig.9
3. Adsorber mit einem oder zwei Austrags- und Begasungsbodensystemen siehe Fig.1
4. Entleerungen
   - 4.1 Als Faßentleerung: siehe Fig.1
   - 4.2 Als Entleerung in Big Bag: siehe Fig.20
   - 4.3 Als Entleerung in Container: siehe Fig.21

### Funktion der Bauelemente

Adsorber finden in zunehmenden Maße breite Anwendung in Industrie, Umweltschutz und Haushalt.
Der Grund dafür ist vor allem das gestiegene Umweltbewußtsein und die stetigen Anforderungen an die Qualität von Produkten.
Bei der Adsorption handelt es sich in erster Linie um physikalische Adhäsion zwischen der Oberfläche des Adsorbens und dem Adsorbat, welches als dünner Film auf der Adsorbensoberfläche ausfällt. Hier findet kein chemischer Vorgang statt.
Die Adsorption ist ein umkehrbarer und selektiver Vorgang.
Solange der Kontakt zwischen Adsorbens und Adsorbat besteht, wird die Adsorption aufrecht erhalten, bis der Dampfdruck des Adsorbates und des Adsorbens gleich sind. Findet keine Adsorption mehr statt, so ist das Gleichgewicht erreicht.
Die ersten Adsorber wurden gegen Ende des 18. Jahrhunderts eingesetzt.
Heute sind Adsorber aus der Abwasser- und Trinkwasseraufbereitung, Gasreinigung und Gastrocknung nicht mehr wegzudenken.

Aus DE-GM 8903669 ist zum Beispiel ein Festbett-Adsorber bekannt, der aus einem Container besteht, in dem zur Begasung über einen äußeren Sammelkanal die Gase in mehrere innenliegende dreieckige gelochte Profilkanäle geleitet werden.
Daß die Gasverteilung über dem gesamten Adsorptionsquerschnitt nicht optimal ist und der gesamte Auslaufkonus nicht begast wird, ist ein entscheidender Nachteil dieses Adsorbers.
Die Beladung des wertvollen Adsorbens bei einem Festbett-Adsorber ist gegenüber dem Wanderbett-Adsorber geringer, weil die Beladung des Adsorbens im Adsorptionsbett vom Rohgas - Eintritt zum Rohgas-Austritt kontinuierlich zunimmt, d.h., bei einer bestimmten Sättigung des Adsorbens kommt es zum Durchbruch des Rohgases am Ende des Adsorptionsbettes.

Trotz der unterschiedlichen Beladung des Adsorbens mit Schadstoffen - unten starke Beladung, oben wenig Beladung - muß das gesamte Adsorbens erneuert werden, obwohl die oberen Schichten noch aufnahmefähig sind.
Beim Wanderbett-Adsorber wird das Adsorbens gleichmäßig hoch beladen und dadurch ein besserer Wirkungsgrad erreicht.
Außerdem ist der Einsatz und das Handling wegen der fehlenden Bauelemente Befüllung, Vorlage und Entleerung eingeschränkt.

Der Erfindung liegt daher die Aufgabe zugrunde, einen Adsorber mit einem hohen Wirkungsgrad zu schaffen, der sich aber auch durch seine Modulbauweise allen Erfordernissen des Betriebs und des Handlings leicht anpassen läßt.
Erfindungsgemäß ist vorgesehen, daß das Rohgas über einen Stutzen im Konus der Entleerung eintritt.
Am unteren Ende der Entleerung erfolgt der Anschluß an die staubfreie Entleerung in ein Transportgefäß über eine flexible Manschette.
Das Rohgas tritt über das erste Austrags- und Begasungssystem in den Schleusenraum und von dort über das zweite Austrags- und Begasungssystem in das Adsorptionsbett ein.
Die Austrags- und Begasungssysteme bilden mit dem Entgasungs- u. Nachspeisesystem ( in der Vorlage ) das Kernstück der Erfindung.
Die Austrags- und Begasungsböden sind so gestaltet, daß zwei Lochbleche, die durch ein Tragwerk abgefangen werden, unterschiedlich große, deckungsgleiche Lochungen in bestimmter Anordnung über den gesamten Adsorberquerschnitt aufweisen.
Dabei sind im festgelegten Raster große Lochungen vorgesehen, durch die das Adsorbens von oben nach unten fließen kann.

Über den restlichen Querschnitt sind kleine, dicht aneinanderliegende Lochungen angebracht, die den Durchtritt des Adsorbens verhindern, den Gasdurchtritt von unten nach oben jedoch gestatten.

Da die beiden Bleche im Lochbild deckungsgleich sind, aber die Breite zwischen den beiden großen Lochungen ( Stegbreiten ) genauso groß sind wie die Breite der Lochungen, lassen sich die großen Lochungen durch Verschieben eines Bleches um eine Stegbreite verschließen.
Das verhindert den Durchtritt des Adsorbens nach unten, gestattet aber weiterhin den ungehinderten Gasdurchtritt nach oben. Beim Öffnen der großen Lochungen fließt sowohl Adsorbens von oben nach unten, als auch Gas von unten nach oben.
Das durch das Adsorbens statisch belastete Blech ist an einem Tragwerk befestigt, welches die Kräfte aus der Beladung aufnimmt.
Der Adsorberquerschnitt kann rund, quadratisch, rechteckig sein oder andere Formen aufweisen.
Auch die Lage der Bleche oder Blechabschnitte kann durchaus unterschiedlich sein.
Der Winkel der Bleche zur Adsorber-Achse kann 90° betragen, oder so geneigt sein, daß durch die statische Belastung und das Schüttverhalten Adsorbens nachfließen kann.
Öffnet man das zweite Austrags- und Begasungssystem, dann fließt beladenes Adsorbens aus dem Adsorberbett in den Schleusenraum. Die Höhe des Schleusenraumes und der Adsorberquerschnitt bestimmen bei jedem Takt die auszuschleusende, beladene Adsorbensmenge.
Ist der Schleusenraum gefüllt, wird das zweite Austrags- und Begasungssystem geschlossen und das erste Austrags- und Begasungssystem geöffnet.
Das Adsorbens fließt nun aus dem Schleusenraum in den Konus der Entleerung und von dort in den Entsorgungsbehälter.
Durch das schichtweise Ausschleusen von beladenem und unter den gegebenen Betriebsbedingungen nicht mehr aufnahmefähigem Adsorbens wird ein optimaler Wirkungsgrad des Adsorbens erreicht.
Eine andere Variante ist das Ausschleusen des beladenen Adsorbens mit nur einem Austrags- und Begasungssystem.

Hier wird die auszuschleusende Adsorbensmenge vom Adsorberquerschnitt und der Öffnungs- und Schließdauer der großen Lochungen bestimmt.
Das Adsorptionsbett wird aus der Vorlage kontinuierlich mit unbeladenem Adsorbens nachgespeist.
Es ist vorgesehen, in die Vorlage Einbauten zu integrieren, die abwechselnd von oben und von vorne geschlossene Schächte bilden. Nach einer Seite der Vorlage sind die Schächte verkürzt. Von der verkürzten Seite zur Vorlagenwand ist ein schräges, nicht gelochtes Blech angeordnet, das an ein senkrechtes, gelochtes Blech anschließt. Dadurch bildet sich ein erweiterter Gassammelraum.
Die Lochgröße in den Lochblechen ermöglicht dem Gas den Austritt in den Entgasungsraum, verhindert aber gleichzeitig das Eindringen des Adsorbens in den Entgasungsraum ( von oben geschlossene und von vorne offene Schächte ).
In den von oben offenen und von vorne geschlossenen Schächten fließt das Adsorbens immer auf das Niveau des Schachtendes ( = Anfang des Adsorptionsbettes ) nach.
Die Ableitung des gereinigten Gases erfolgt aus den von oben geschlossenen und von vorne offenen Schächten und aus dem Gassammelraum und von dort in den an der Außenwand angebrachten Reingasstutzen.
Außerdem ist das Adsorbersystem in der dargestellten Ausführung auch als Trockner für körnige oder staubförmige Schüttgüter geeignet. Der Verfahrensvorgang ist hier jedoch umgekehrt.
Ein trockenes Gas tritt über den Rohgas-Eintritt und weiter über Austrags - u. Begasungssysteme in die mit Feuchtigkeit beladene Schüttung (vorher Adsorptionsbett genannt) ein.
Auf dem Weg durch die Schüttgüter zum Nachspeise- u. Entgasungssystem wird das trockene Gas immer mehr befeuchtet und das Schüttgut gleichermaßen entfeuchtet. Dieser Vorgang besteht so lange, bis der Partialdruck von Gas und Schüttgut gleich ist.

Das befeuchtete Gas tritt am Reingas-Austritt aus.
Durch das Entgasungs - u. Nachspeisesystem tritt im Gegenstrom die gleiche Menge feuchtes Schüttgut nach, die als getrocknetes Schüttgut über die Austrags- u. Begasungsböden in die Entleerung ausgeschleust wird.
Die erfindungsgemäße Ausführung des Adsorbersystems wird anhand mehrerer Figuren dargestellt.

Es zeigt
- Fig. 1: ein Adsorbersystem, bestehend aus den Bauelementen Sackaufgabe, Vorlage, Adsorber, Entleerung und Entsorgungsgefäß.
- Fig. 2: ein Adsorbersystem mit Vorlage, Entgasungs- und Nachspeisesystem und ein Adsorptionsbett mit zwei Austrags- und Begasungssystemen, dem Schleusenraum und der Entleerung.
- Fig. 3: das gleiche System wie Fig.2, jedoch nur mit einem Austrags- und Begasungssystem.
- Fig. 4: einen Ausschnitt des oberen Austrags- und Begasungssystems.
- Fig. 5: einen Ausschnitt des unteren Austrags- und Begasungssystems.
- Fig. 6, 7: ein Austrags- und Begasungssystem für runde Adsorberquerschnitte mit verschiedenen Locharten.
- Fig. 8, 9, 10, 11, 12, 13: verschiedene Lochquerschnitte für große und kleine Lochungen.
- Fig. 14, 15, 16: Ausschnitte mit Vorlagen und verschiedenen Entgasungs- und Nachspeisesystemen.
- Fig. 17: eine Aufgabe als Big Bag - Aufgabe und Vorlage.
- Fig. 18: eine Aufgabe als Container und Vorlage.
- Fig. 19: eine Entleerung für Big Bag.
- Fig. 20: eine Entleerung für Container.

In Figur 1 ist ein Adsorbersystem ( 1 ), bestehend aus den Bauelementen Sackaufgabe ( 3 ), Vorlage ( 6 ), Entleerung ( 11 ) mit
Entsorgungsgefäß Faß ( 14 ) dargestellt. Die einzelnen Bauelemente sind durch Flansche verbunden.
Zum Befüllen der Sackaufgabe (3) wird die Tür (60) geöffnet und die Kippvorrichtung (58) mit einer Sackaufnahme (57) nach außen gekippt.
Nach dem Beladen mit einem Sack (64) wird die Kippvorrichtung nach innen gekippt. An ihrem Boden befinden sich Schlitze.
Auf der vorderen Wand der Sackaufgabe befinden sich innenliegende Messer (56).

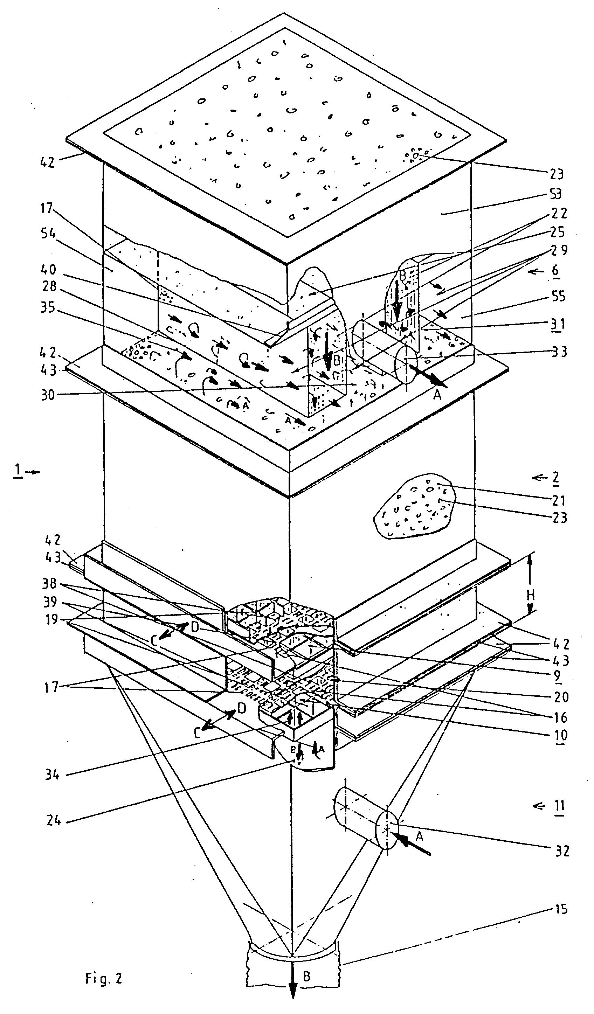

In Figur 2 ist ein Adsorbersystem ( 1 ), welches aus den mit Flanschen ( 42 ) verbundenen Bauelementen Vorlage ( 6 ), Adsorber ( 2 ) und Entleerung ( 11 ) besteht, in perspektivischer Darstellung abgebildet.
Das in die Vorlage ( 6 ) eingebaute Entgasungs- und Nachspeisesystem ( 31 ) zeigt zwei nach oben und unten offene Nachspeiseschächte, die seitlich durch von oben geschlossenen Schächten den Gassammelräumen ( 29 ) begrenzt sind und nach hinten mit der Vorlagen-Rückwand ( 54 ) sowie vorne durch die Gas-sammelraum-Trennwand (22 ) abschließen.
Nach vorne bildet das schräge, nicht gelochte Blech ( 40 ) mit der Vorlagen-Vorderwand ( 53 ) und den nach oben geschlossenen Gassammelräumen den erweiterten Gassammelraum ( 30 ).

Die Gassammelräume ( 29 ) werden durch oben, seitlich und nach hinten geschlossene Schächte gebildet. Die beiden äußeren Gassammelräume ( 29 ) bilden unter 90° gebogene Lochbleche, die nach hinten und seitlich an der Vorlagen-Außenwand ( 54 ) und ( 55 ) und vorne an einem schrägen Blech ( 40 ) befestigt sind. Der mittlere Gassammelraum wird durch ein U-förmig gebogenes Lochblech, das hinten an der Vorlagen-Rückwand ( 54 ) und vorne am schrägen Blech ( 40 ) befestigt ist, gebildet. Der erweiterte Gassammelraum ( 30 ) wird nach oben durch das schräge Blech ( 40 ) und hinten durch die vorne geschlossenen Nachspeiseschächte ( 25 ) sowie seitlich durch die Vorlagen-Seitenwände ( 55 ) und vorne durch die Vorlagen-Vorderwand (53 ) begrenzt. Der Reingas-Austritt ( 33 ) befindet sich auf der Vorlagen-Vorderwand ( 53 ) und stellt die Verbindung vom erweiterten Gassammelraum ( 30 ) zum Rohrnetz dar. Nach unten enden die Gassammelräume mit dem Anfang des Adsorptionsbettes ( 21 ). Das Reingas ( 35 ) tritt am Nachspeiseschachtende ( 28 ) aus dem Adsorptionsbett ( 21 ) in die Gassammelräume ( 29 ) und ( 30 ) in Flußrichtung A aus. Das Adsorbens fließt in Richtung B aus der Vorlage ( 6 ) durch die Nachspeiseschächte ( 25 ) zum Adsorptionsbett ( 21 ). Unter der Vorlage ( 6 ) ist der Adsorber ( 2 ) mit Adsorptionsbett ( 21 ) und zwei Austrags- und Begasungssystemen ( 9 ) u. ( 10 ) und der Schleusenraum ( 20 ) abgebildet.
Unter dem Tragwerk (19 ) (Ausschnitt) des oberen Austrags- und Begasungssystems ( 9 ) ist ein feststehendes Lochblech ( 38 ) (im Ausschnitt), das deckungsgleich mit dem darunterliegenden verschiebbaren Lochblech ( 39 ) dargestellt ist, abgebildet. Zur Stützung des verschiebbaren Lochblechs ( 39 ) erkennt man ein zweites Tragwerk ( 19 ). Das verschiebbare Lochblech ( 39 ) ist seitlich zwischen Flanschen ( 42 ) nach außen geführt und nach oben abgewinkelt. Durch Verschieben in C-D-Richtung werden die großen Lochungen ( 16 ) geöffnet oder geschlossen. Neben den großen Lochungen ( 16 ) sind kleine Lochungen ( 17 ) dargestellt. Beim unteren Austrags- und Begasungssystem ( 10 ) liegt das verschiebbare Lochblech ( 39 ) über dem festen Loch blech ( 38 ) und ist im äußeren Teil nach unten abgewinkelt.
Unter dem feststehenden Lochblech ( 38 ) ist zur Stützung ein Tragwerk ( 19 ) ersichtlich. Durch den Abstand H zwischen dem oberen und dem unteren Austrags- und Begasungssystem ( 9 ) erkennt man den Schleusenraum ( 20 ).
Die beiden Austrags- und Begasungssysteme sind in U-förmige, aneinander geflanschten Rahmen eingebaut, die oben an dem Adsorptionsbett ( 21 ) und unten an der Entleerung ( 11 ) befestigt sind.
Die konische Entleerung ( 11 ) weist nach vorne den Rohgas-Eintritt ( 32 ) auf und endet unten in einem Ring zur Befestigung der flexiblen Manschette ( 15 ).

Auf die Darstellung der Schrauben und Dichtungen bei den Flanschen ( 42 ) wurde verzichtet.

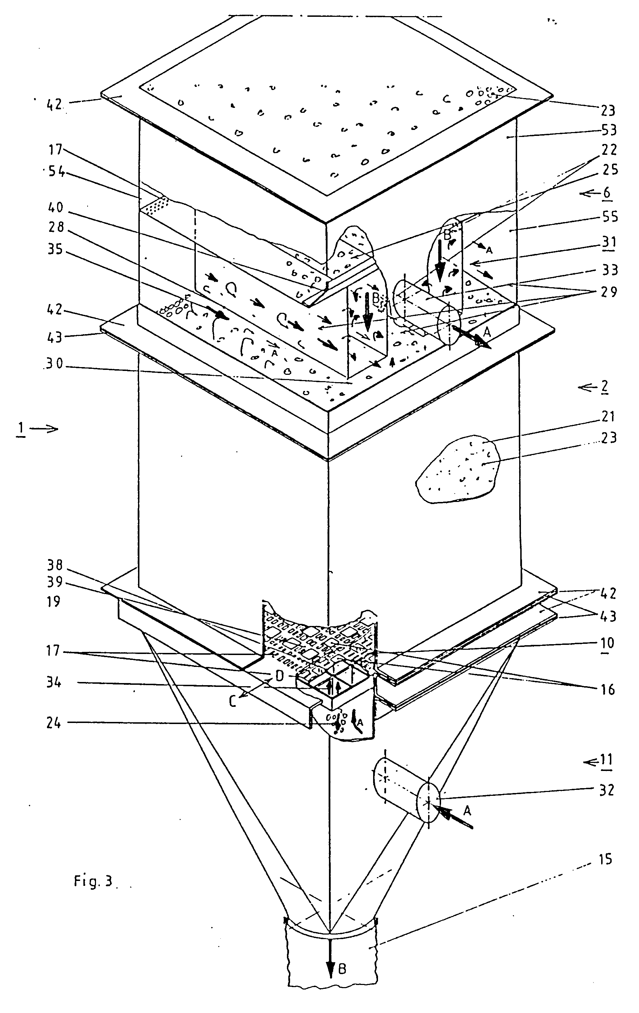

In Figur 3 ist ein Adsorber ( 2 ) mit Entleerung ( 11 ) dargestellt, mit nur einem Entleerungs- und Begasungssystem ( 10 ). Die Beschreibung des Entleerungs- und Begasungssystems ( 10 ) ist identisch mit der Beschreibung des oberen Begasungs- und Entleerungssystems ( 9 ) in Figur 2.

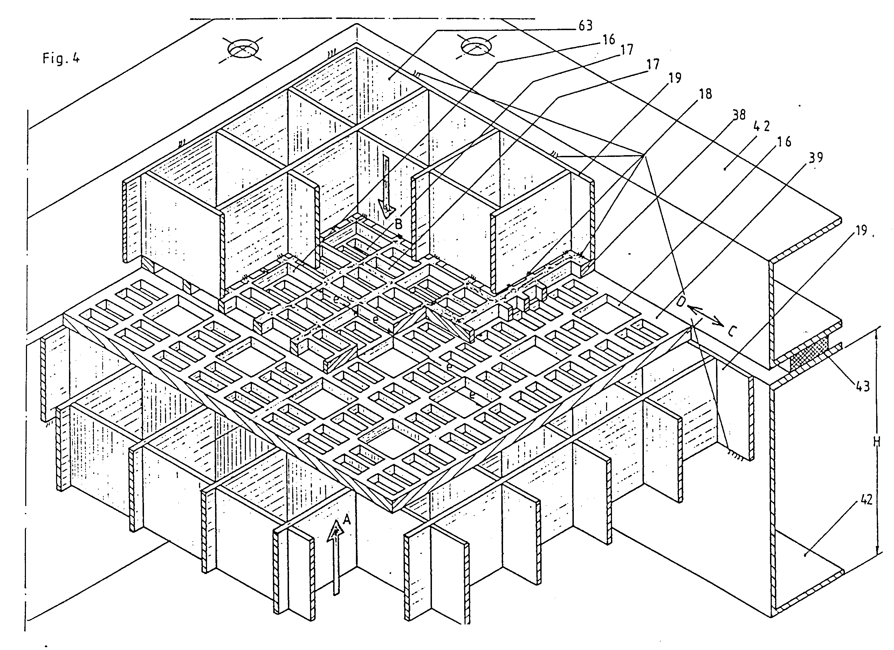

In Figur 4 ist ein Ausschnitt des oberen Austrags- und Begasungssystems ( 9 ) in perspektivischer Darstellung abgebildet, welches oben einen U-förmigen Rahmen darstellt, in dem ein Tragwerk ( 19 ) aus flachen, sich kreuzenden Stäben dargestellt ist, das durch Schweißnähte (18) oder Schrauben mit dem U-Rahmen verbunden ist. Unter dem Tragwerk (19 ) ist das feststehende Lochblech ( 38 ) angeschweißt. Das Lochblech ( 38 ) weist neben den großen, quadratischen Lochungen ( 16 ) kleine, rechteckige Lochungen ( 17 ) auf, die sich über den gesamten übrigen Querschnitt der Blechfläche verteilen. Lediglich die schmalen Randzonen sind nicht gelocht. In Richtung C-D ist die Länge der großen Lochungen ( 16 ) e genauso groß wie der Abstand e der großen Lochungen ( 16 ) untereinander. Zwischen den Lochungen befinden sich schmale Stege. Unter dem feststehen den Lochblech ( 38 ) ist mit geringem Abstand ein verschiebbares Lochblech ( 39 ) mit deckungsgleichem Lochbild wie das feststehende Lochblech ( 38 ) abgebildet, welches durch Verschiebung in die Endlage der Richtung D die großen Lochungen durch kleine Lochungen sperrt. Unter dem verschiebbaren Lochblech ( 39 ) ist ein zweites Tragwerk ( 19 ) zu sehen, welches ebenso wie das obere Tragwerk ( 19 ) an einen U-Rahmen geschweißt oder geschraubt ist. Der untere U-Rahmen ist höher als der obere und weist mit der Höhe H die Höhe des Schleusenraumes ( 20 ) aus.
Zwischen den U-Rahmen liegt eine Dichtung ( 43 ). Die Richtung des verschiebbaren Lochbleches ( 39 ) ist mit C-D gekennzeichnet.
Die Strömungsrichtung des Rohgases ist mit A gekennzeichnet und die Fließrichtung des Adsorbens mit B.

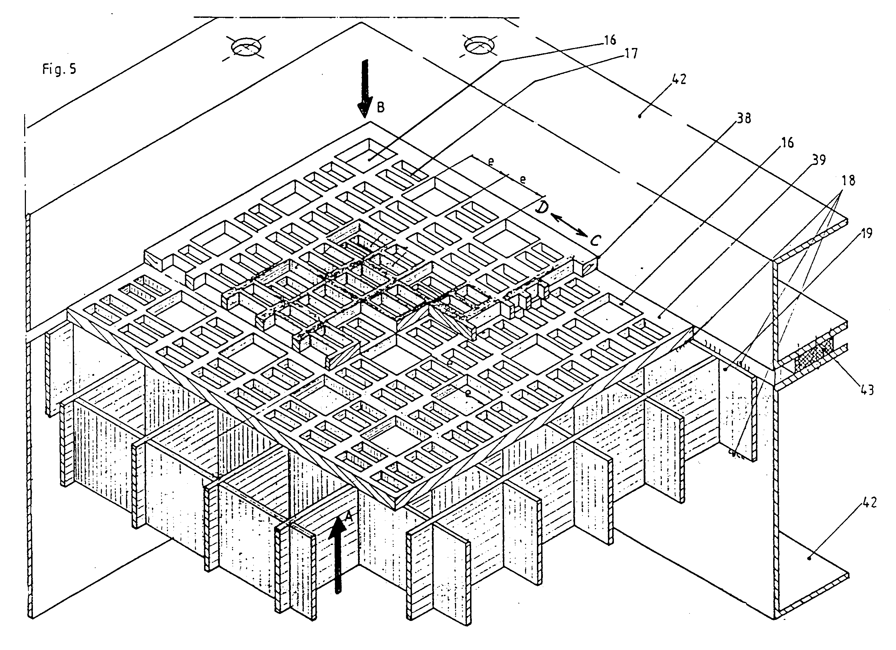

In Figur 5 ist ein Ausschnitt des unteren Austrags- und Begasungssystems in perspektivischer Darstellung abgebildet. Ein verschiebbares Lochblech ( 39 ) weist neben den großen quadratischen Lochungen ( 16 ) kleine rechteckige Lochungen ( 17 ) auf, die sich über den gesamten übrigen Querschnitt der Blechfläche verteilen.
Lediglich die Randzonen sind nicht gelocht. In Richtung C-D ist die Länge der großen Lochungen ( 16 ) e genauso groß wie der Abstand e der großen Lochungen ( 16 ) untereinander.
Zwischen den Lochungen befinden sich schmale Stege. Das verschiebbare Lochblech ( 39 ) gleitet auf dem feststehenden Lochblech ( 38 ), dessen Lochbild deckungsgleich mit dem oberen ist.
Das feststehende Lochblech ( 38 ) ist durch Punktschweißungen ( 18 ) am darunterliegenden Tragwerk ( 19 ) befestigt.
Das Tragwerk ( 19 ) wiederum ist durch Schweißen oder Schrauben an einen U-Rahmen befestigt.

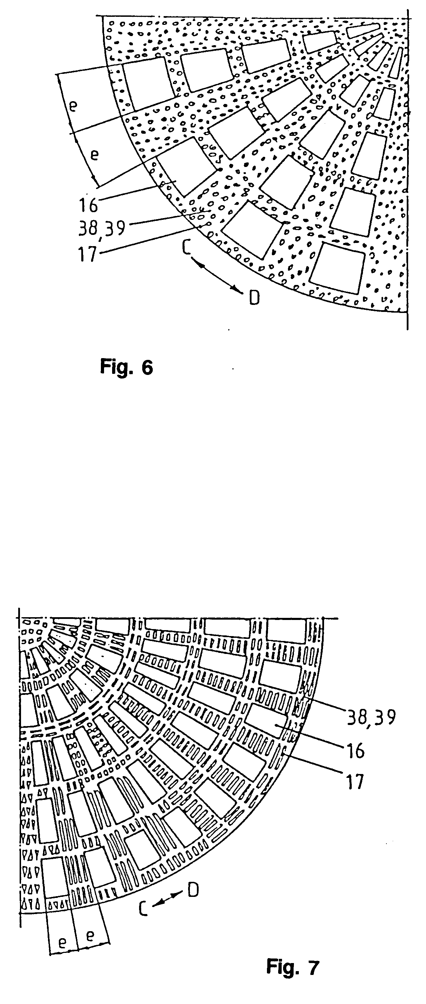

In Figur 6 und 7 sind je ein Viertel eines Lochbleches ( 38 ) oder ( 39 ) für Austrags- und Begasungssysteme zum Einbau in Adsorbern ( 2 ) mit rundem Querschnitt dargestellt. Die Lochungen ( 16 ) und ( 17 ) weisen in beiden Darstellungen unterschiedliche Formen auf.
Die Breite der großen Lochungen ( 16 ) e ist gleich der Breite e zwischen den großen Lochungen ( 16 ). Durch Drehen des unteren Lochblechs ( 39 ) in C-D-Richtung um den Weg e lassen sich die großen Lochungen ( 16 ) des oberen feststehenden Lochblechs ( 38 ) durch die kleinen Lochungen ( 17 ) verschließen.
In Figur 8 bis 13 sind die möglichen Lochquerschnitte der großen und kleinen Lochungen ( 16 ) und ( 17 ) dargestellt.

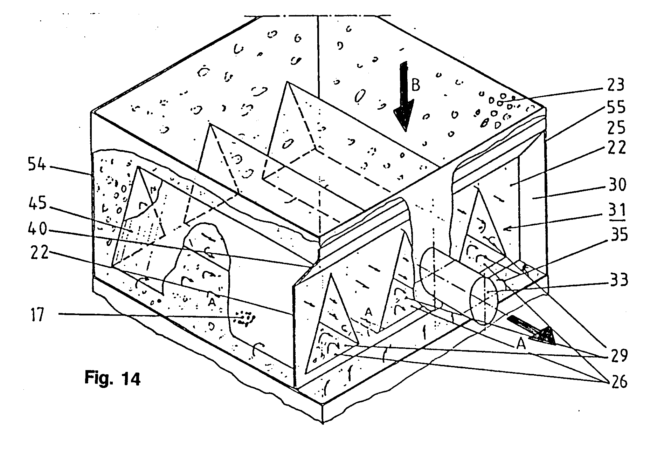

In Figur 14 ist ein Entgasungs- und Nachspeisesystem ( 31 ) dargestellt, dessen Entgasungsräume ( 29 ) aus mit spitzem Winkel gekanteten Lochblechen mit kleinen Lochungen ( 17 ) bestehen. Die Lochbleche sind an der Vorlagen-Rückwand ( 54 ) und an der mit dreieckigen Ausschnitten versehenen erweiterten Gassammelraum Trennwand ( 22 ) befestigt. Die Nachspeiseschächte ( 25 ) werden durch die Gassammelrohre ( 45 ) der erweiterten Gassammelraum-Trennwand ( 22 ) und/oder der Vorlagenrück- und Seitenwände gebildet. Der übrige Teil entspricht der Figur 2.

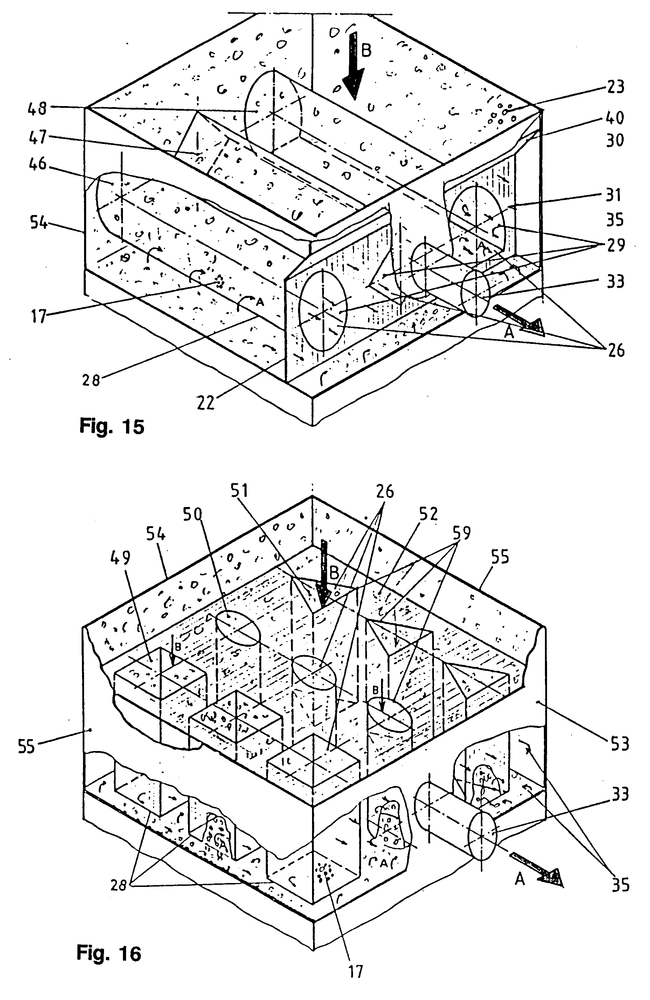

In Figur 15 sind als weitere Formen der Gassammelräume ( 29 ) ein Rohr ( 46 ), ein auf die Spitze gestelltes Viereckrohr ( 47 ) und ein nach unten offenes Halbrohr ( 48 ) dargestellt, die wiederum an der Vorlagen-Rückwand ( 54 ) und an der erweiterten Gassammelraum-Trennwand ( 22 ) mit entsprechenden Ausschnitten befestigt sind. Die übrige Beschreibung wie bei Figur 14.

In Figur 16 ist ein Entgasungs- und Nachspeisesystem dargestellt, das aus senkrechten Rohren ( 49 ),( 50 ) und ( 51 ), die aus Lochblech mit kleinen Lochungen ( 17 ) besteht, deren Querschnitte quadratisch, rund und dreieckig sind.
Am oberen Rohrende ( 59 ) ist ein nicht gelochtes, mit Ausschnitten ( 26 ) versehenes Abdeckblech ( 52 ) befestigt, das auch an den Vorlagenwänden ( 53 ) - ( 55 ) befestigt ist.
Die oben und unten offenen Rohre ( 49 ) bis ( 51 ) bilden im Inneren die Nachspeiseschächte. Um die Rohre ist außen von der Abdeckblechunterkante bis zur Rohrunterkante, durch die Vorlagenwand begrenzt, der Entgasungsraum ( 29 ) ausgebildet.
Der Reingas-Austritt ( 33 ) befindet sich auf der Vorlagen-Vorderwand ( 53 ) und stellt die Verbindung vom Gassammelraum (29) zum Rohrnetz dar. Nach unten endet der Gassammelraum (29) mit dem Anfang des Adsorptionsbettes (28) am Nachspeiseschachtende.
Das Reingas tritt am Schachtende aus dem Adsorptionsbett (21) in den Gassammelraum (29) in Flußrichtung A aus. Das Adsorbens (23) fließt in Richtung B aus der Vorlage (6), (7) o. (8) durch die Nachspeiseschächte (25) zum Adsorptionsbett (21).

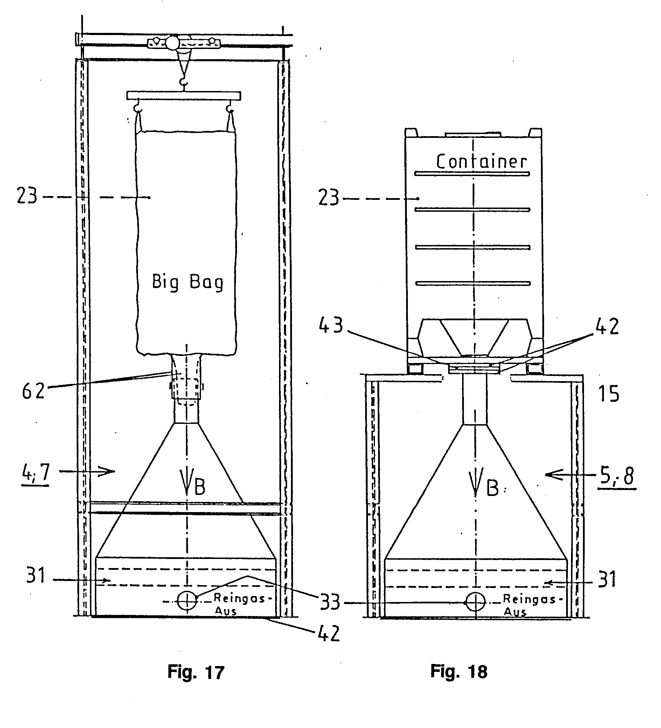

In Figur 17 ist eine Aufgabe als Big Bag Aufgabe ( 4 ) und Vorlage ( 7 ) dargestellt. Die Aufgabe ( 4 ) besteht im oberen Teil aus dem runden Einlaufstutzen, der am unteren Ende in einen Konus mündet. Der von rund im oberen Teil auf quadratisch im unteren Teil wechselnde Konus bildet mit dem sich anschließenden viereckigen, geraden Teil Aufgabe ( 4 ) und Vorlage ( 7 ) zugleich. Im geraden Teil ist das Entgasungs-und Nachspeisesystem ( 31 ) mit dem Reingasaustritt ( 33 ) angebracht. Am unteren Ende des geraden Teils der Vorlage ( 7 ) befinden sich die Flansche ( 42 ). Der Big Bag wird mittels innerem und äußerem Auslaufschlauch ( 62 ) am Einlaufstutzen befestigt.

In Figur 18 ist eine Aufgabe als Container-Aufgabe ( 5 ) und -vorlage ( 8 ) dargestellt. Die Aufgabe ( 5 ) besteht im oberen Teil aus dem runden Einlaufstutzen, der am unteren Ende in einen Konus mündet. Der von rund im oberen Teil auf quadratisch im unteren Teil wechselnde Konus bildet mit dem sich anschließenden viereckigen, geraden Teil Aufgabe ( 5 ) und Vorlage ( 8 ) zugleich.
Im geraden Teil ist das Entgasungs-und Nachspeisesystem ( 31 ) mit dem Reingas-Austritt ( 33 ) angebracht. Am unteren Ende des geraden Teils der Vorlage ( 8 ) befinden sich die Flansche (42).
Der Container sitzt mit seinem Auslaufflansch auf dem mit einer weichen Dichtung ( 43 ) versehenen Einlaufflansch auf und dichtet staubfrei ab.

In Figur 19 ist eine Entleerung (12) für Big Bag ( 14 ) dar gestellt, bei dem die von viereckig auf rund wechselnde konische Entleerung ( 12 ) oben einen Flansch zum Anschluß an den Adsorber ( 2 ) aufweist und unten in einen geraden Auslauf-Stutzen endet.
Der Einlaufschlauch ( 61 ) des Big Bag ist mittels Schlauchklemme am Auslaufstutzen befestigt und dichtet staubfrei ab.

In Figur 20 ist eine Entleerung (13) für Container ( 14 ) dargestellt, bei dem die von viereckig auf rund wechselnde konische Entleerung ( 13 ) oben einen Flansch zum Anschluß an den Adsorber ( 2 ) aufweist und unten in einen geraden Auslauf-Stutzen endet.
Der Anschluß zum Container ( 14 ) erfolgt mittels flexibler Manschette ( 15 ), die sowohl am Auslaufstutzen als auch am Einlaufstutzen des Containerdeckels mittels Schlauchklemmen staubfrei abschließt.

### Bezugszeichenliste

- 1: Adsorbersystem
- 2: Adsorber
- 3: Aufgabe als Sackaufgabe
- 4: Aufgabe als Big Bag-Aufgabe
- 5: Aufgabe als Container-Aufgabe
- 6: Vorlage für Sackaufgabe
- 7: Vorlage für Big Bag-Aufgabe
- 8: Vorlage für Container-Aufgabe
- 9: Oberes Austrags- und Begasungsbodensystem
- 10: Unteres Austrags- und Begasungsbodensystem
- 11: Entleerung für Fässer
- 12: Entleerung für Big Bag
- 13: Entleerung für Container
- 14: Transportgefäß = Entsorgungsbehälter
- 15: Flexible Manschette
- 16: Große Lochung
- 17: Kleine Lochung
- 18: Schweißnähte
- 19: Tragwerk
- 20: Schleusenraum
- 21: Adsorptionsbett oder Schüttgutsäule
- 22: Gassammelraumtrennwand
- 23: Adsorbens unbeladen oder Schüttgut feucht
- 24: Adsorbens beladen oder Schüttgut trocken
- 25: Nachspeiseschacht
- 26: Ausschnitte
- 27: -
- 28: Nachspeiseschachtende = Anfang Adsorptionsbett
- 29: Gassammelraum
- 30: Erweiterter Gassammelraum
- 31: Entgasungs- und Nachspeisesystem
- 32: Rohgas-Eintritt oder Trockengas-Eintritt
- 33: Reingas-Austritt oder Feuchtgas-Austritt
- 34: Rohgas oder Trockengas
- 35: Reingas oder Feuchtgas
- 36: Außenwand
- 37: Tragwerk
- 38: feststehendes Lochblech mit kleinen u. großen Lochungen
- 39: verschiebbares Lochblech mit kleinen u. großen Lochungen
- 40: nicht-gelochtes Blech
- 41: -
- 42: Flansche
- 43: Dichtung
- 44: -
- 45: Dreieckige, waagerechte Gassammelrohre
- 46: Runde, waagerechte Gassammelrohre
- 47: Quadratische, waagerechte Gassammelrohre
- 48: Unten offene, waagerechte halbe Gassammelrohre
- 49: Quadratisch senkrechte Gassammelrohre
- 50: Runde senkrechte Gassammelrohre
- 51: Dreieckige senkrechte Gassammelrohre
- 52: Abdeckblech
- 53: Vorlagen-Vorderwand
- 54: Vorlagen-Rückwand
- 55: Vorlagen-Seitenwand
- 56: Messer
- 57: Sackaufnahme
- 58: Kippvorrichtung
- 59: Oberer Rand, Rohrende
- 60: Tür
- 61: Einlaufschlauch
- 62: Auslaufschlauch
- 63: Öffnungen
- 64: Sack
- A: Gasströmung
- B: Fließrichtung Adsorbens oder Schüttgut
- C-D: Bewegrichtung
- E-F: Kipprichtung
- e: Stegbreite = Breite große Lochung

## Patentansprüche

1. Adsorbersystem (1) zum Reinigen von Gasen oder zum Trocknen von Schüttgütern, bestehend aus den in vertikaler Anordnung von oben nach unten geschichteten und durch abgedichtete Flanschverbindungen miteinander verbundenen Baugruppen
Aufgabe (3,4,5) des Adsorbens bzw. des Schüttgutes (23),
Vorlage (6,7,8) mit Entgasungs- u. Nachspeisungssystem (31),
Adsorber (2) mit Adsorptionsbett und Austrags- und Begasungssystem (9,10)
und Entleerung (11,12,13),
wobei das Adsorbens bzw. das Schüttgut (23) die Anordnung der Baugruppen von oben nach unten und das Gas (34) diese Anordnung im Gegenstrom von unten nach oben durchläuft, mit den weiteren Merkmalen:
a) Das Austrags- u. Begasungsbodensystem (9,10) ist mit wenigstens zwei, ein Austrags- u. Begasungsbodensystem bildenden, zueinander parallel angeordneten und parallel gegeneinander verschiebbaren, oben und unten im wesentlichen ebenflächigen, aufeinanderliegenden Lochblechen (38,39) versehen, die mit deckungsgleichen, sich im wesentlichen über
den ganzen Adsorberquerschnitt erstreckenden Lochbildern ausgebildet sind,
b) jedes Lochbild weist im Raster angeordnete erste (große) Lochungen (16) auf, die so groß sind, daß sie den Durchtritt des Adsorbens bzw. Schüttgutes (24) gestatten,
Lochungen (16) auf, die so groß sind, daß sie den Durchtritt des Adsorbens bzw. Schüttgutes (24) gestatten,
c) zwischen je zwei aufeinanderfolgenden ersten (großen) Lochungen (16) ist eine Gruppe von zweiten (kleinen) Lochungen (17) ausgebildet, deren Größe so ist, daß sie den Durchtritt des Adsorbens bzw. Schüttgutes (24) verhindern, den Gasdurchtritt jedoch gestatten,
d) durch Verschieben der Lochbleche (38,39) relativ und parallel zueinander sind die Gruppen von kleinen Lochungen (17) des einen Lochblechs in Überdeckung mit den großen Lochungen (16) des anderen Lochblechs bringbar, so daß in dieser Verschiebestellung der Lochbleche der Durchtritt des Adsorbens bzw. Schüttgutes (24) nach unten verhindert, der Gasdurchtritt nach oben jedoch ungehindert ist, während in allen anderen Verschiebestellungen der Lochbleche (38,39) sowohl Adsorbens bzw. Schüttgut (24) von oben nach unten als auch Gas (34) von unten nach oben durchtreten kann.

2. Adsorbersystem nach Anspruch 1, mit den weiteren Merkmalen, daß zwei übereinander angeordnete, aus je zwei Lochblechen (38,39) gebildete Austrags- u. Begasungsbodensysteme (9,10) vorgesehen sind, die zwischen sich einen Schleusenraum (20) bilden, derart daß beim Öffnen des oberen Austrags- u. Begasungsbodensystems (9) durch entsprechende Relativverschiebung seiner Lochbleche (38,39) beladenes Adsorbens bzw. trockenes Schüttgut (24) aus dem Adsorberbett (21) nach unten in den Schleusenraum (20) fließen kann und daß nach der so erfolgenden Befüllung des Schleusenraums (20) das obere Austrags- u. Begasungsbodensystem (9) geschlossen und das untere, zuvor geschlossene Austrags- u. Begasungsbodensystem (10) durch entsprechende Relativverschiebung seiner Lochbleche (38,39) geöffnet werden und das Adsorbens bzw. Schüttgut (24) aus dem Schleusenraum in die Entleerung abfließen kann.

3. Adsorbersystem nach Anspruch 1 oder 2, mit den weiteren Merkmalen, daß von den beiden Lochblechen (38,39) jedes Austrags- u. Begasungsbodensystems (9,10) das eine bezüglich der übrigen Anordnung feststeht und nur das andere verschiebbar ist.

4. Adsorbersystem nach einem oder mehreren der Ansprüche 1 bis 3
dadurch gekennzeichnet,
daß zwischen dem Adsorptionsbett ( 21 ) und der Entleerung ( 11, 12, 13 ) das Austrags- und Begasungsbodensystem (9, 10) angeordnet ist.

5. Adsorbersystem nach einem oder mehreren der Ansprüche 1 bis 4
dadurch gekennzeichnet,
daß sich zwischen dem unteren Ende der Vorlage ( 6, 7, 8, ) und dem Adsorptionsbett das Entgasungs- und Nachspeisungssystem (31) befindet.

6. Adsorbersystem nach einem oder mehreren der Ansprüche 1 bis 5
dadurch gekennzeichnet,
daß die Austrags- und Begasungsbodensysteme ( 9 ,10 ) aus den Tragwerken ( 19 ) durch sich kreuzende Flachstähle gebildet sind.

7. Adsorbersystem nach einem oder mehreren der Ansprüche 1 bis 6
dadurch gekennzeichnet,
daß die Entgasungs-und Nachspeisesysteme ( 31 ) aus den im Wechsel angeordneten Nachspeiseschächten ( 25 ) für das Adsorbens (23), den Gassammelräumen ( 29, 30 ) für das Rein- oder oder Feuchtgas (35) gebildet werden.

8. Adsorbersystem nach einem oder mehreren der Ansprüche 1 bis 7
dadurch gekennzeichnet,
daß bei schichtweiser Austragung des Adsorbens ( 24 ) zwischen dem oberen Austrags- und Begasungsbodensystem ( 9 ) und dem unteren Austrags- und Begasungsbodensystem ( 10 ) ein Schleusenraum ( 20 ) vorgesehen ist.

9. Adsorbersystem nach einem oder mehreren der Ansprüche 1 bis 8
dadurch gekennzeichnet,
daß die großen Lochungen ( 16 ) in Bewegungsrichtung C-D so angeordnet sind, daß die Lochbreite ( e ) gleich der Stegbreite ( e ) ist.

10. Adsorbersystem nach einem oder mehreren der Ansprüche 1 bis 9
dadurch gekennzeichnet,
daß bei schichtweiser Austragung des Adsorbens mit nur einem Austrags- und Begasungsbodensystem ( 9, 10 ) die auszutragende Adsorbensmenge je Takt über die Öffnungsdauer der großen Lochungen ( 16 ) bestimmt wird.

11. Adsorbersystem nach einem oder mehreren der Ansprüche 3 bis 10
dadurch gekennzeichnet,
daß die feststehenden Lochbleche (38) durch Tragwerke (19) gestützt werden.

12. Adsorbersystem nach einem oder mehreren der Ansprüche 3 bis 11
dadurch gekennzeichnet,
daß beim oberen Austrags- und Begasungsbodensystem ( 9 ) auch das verschiebbare Lochblech (39) vom Tragwerk (19) gestützt wird.

13. Adsorbersystem nach einem oder mehreren der Ansprüche 3 bis 12
dadurch gekennzeichnet,
daß das feststehende Lochblech ( 38 ) durch Schweißen, Nieten, Schrauben oder ähnliches am Tragwerk ( 19 ) befestigt ist.

14. Adsorbersystem nach einem oder mehreren der Ansprüche 1 bis 13
dadurch gekennzeichnet,
daß bei runden Querschnitten der Baugruppen des Adsorbersystems(1) das Öffnen und Schließen der großen Lochungen (16) in den Lochblechen (38 ,39) durch Drehen des verschiebbaren Lochblechs (39) um eine vertikale Achse erfolgt.

15. Adsorbersystem nach einem oder mehreren der Ansprüche 4 bis 14
dadurch gekennzeichnet,
daß unter dem Tragwerk ( 19 ) ein bewegliches Lochblech angeordnet ist.

16. Adsorbersystem nach einem oder mehreren der Ansprüche 4 bis 15
dadurch gekennzeichnet,
daß die großen Lochungen ( 16 ) im Tragwerk ( 19 ) mit pyramidenförmigen Hauben deckungsgleich mit den goßen Lochungen ( 16 ) im beweglichen Lochblech ( 39 ) sind.

17. Adsorbersystem nach einem oder mehreren der Ansprüche 5 bis 16
dadurch gekennzeichnet,
daß das Reingas oder Feuchtgas ( 35 ) aus dem Adsorptionsbett bzw. der Schüttgutsäule ( 21 ) am Schachtende ( 28 ) in die Gassammelräume ( 29 ) und ( 30 ) eintritt.

18. Adsorbersystem nach einem oder mehreren der Ansprüche 5 bis 17
dadurch gekennzeichnet,
daß das Reingas oder Feuchtgas ( 35 ) aus den Gassammelräumen ( 29 ) über den erweiterten Gassammelraum ( 30 ) und weiter über den Reingas - Austritt oder Feuchtgas-Austritt ( 33 ) das Adsorptionssystem verläßt.

19. Adsorbersystem nach einem oder mehreren der Ansprüche 1 bis 18
dadurch gekennzeichnet,
daß sich die Entgasung und Nachspeisung ( 31 ) am unteren Ende der Vorlage ( 6 ), ( 7 ) oder ( 8 ) befindet.

20. Adsorbersystem nach einem oder mehreren der Ansprüche 1 bis 19
dadurch gekennzeichnet,
daß die Entgasung und Nachspeisung ( 31 ) durch von oben offene Schächte ( 25 ) und von oben geschlossene Schächte (Gassammelraum)( 29 ) gebildet werden.

21. Adsorbersystem nach einem oder mehreren der Ansprüche 5 bis 20
dadurch gekennzeichnet,
daß die Nachspeiseschächte ( 25 ), die Gassammelraumtrennwand ( 22 ) und die Gassammelräume ( 29 ) aus Lochblech mit kleinen Lochungen ( 17 ) ausgeführt sind.

22. Adsorbersystem nach einem oder mehreren der Ansprüche 5 bis 21
dadurch gekennzeichnet,
daß die Nachspeiseschächte ( 25 ) hinten durch die Vorlagenrückwand ( 54 ) und vorne durch die Gassammelraumtrennwand ( 22 ) geschlossen sind.

23. Adsorbersystem nach einem oder mehreren der Ansprüche 1 bis 19
dadurch gekennzeichnet,
daß die Gassammeltrennwand ( 22 ) nach oben durch ein geneigtes nicht gelochtes Blech ( 40 ) mit der vorderen Vorlagen-Vorderwand ( 53 ) verbunden ist und dadurch der erweiterte Gassammelraum ( 30 ) entsteht.

24. Adsorbersystem nach einem oder mehreren der Ansprüche 5 bis 23
dadurch gekennzeichnet,
daß für die Nachspeiseschächte ( 25 ) in der Gassammelraumtrennwand ( 22 ) Öffnungen ( 63 ) vorgesehen sind.

25. Adsorbersystem nach einem oder mehreren der Ansprüche 5 bis 24
dadurch gekennzeichnet,
daß die Gassammelräume ( 29 ) auch aus waagerecht liegenden Rohren ( 45 ), ( 46 ), ( 47 ) und ( 48 ) gebildet werden können.

26. Adsorbersystem nach einem oder mehreren der Ansprüche 1 bis 25
dadurch gekennzeichnet,
daß das Entgasungs- und Nachspeisesystem ( 31 ) auch aus senkrechten Rohren ( 46 , 47, 48 ) und einem Abdeckblech ( 52 ) gebildet werden kann.

27. Adsorbersystem nach Anspruch 25 oder 26
dadurch gekennzeichnet,
daß die senkrechten Rohre ( 46 ),( 47 ) oder ( 48 ) am oberen Rand ( 59 ) mit einem Abdeckblech ( 52 ) verbunden sind.

28. Adsorbersystem nach einem oder mehreren der Ansprüche 1 bis 27
dadurch gekennzeichnet,
daß die Adsorbens-Aufgaben ( 3 ), ( 4 ) und ( 5 ) für die Beschickung mit verschiedenen Gebinden ausgerüstet sind.

29. Adsorbersystem nach einem oder mehreren der Ansprüche 1 bis 28
dadurch gekennzeichnet,
daß zum Befüllen der Sackaufgabe ( 3 ) die Tür ( 60 ) geöffnet und die Kippvorrichtung ( 58 ) nach außen gekippt wird.

30. Adsorbersystem nach Anspruch 29
dadurch gekennzeichnet,
daß die Sackaufgabe ( 3 ) mit einer Kippvorrichtung ( 58 ) nach dem Beladen mit einem Sack nach innen in Richtung F gekippt wird.

31. Adsorbersystem nach Anspruch 29
dadurch gekennzeichnet,
daß sich in dem Boden der Kippvorrichtung ( 58 ) Schlitze befinden.

32. Adsorbersystem nach einem oder mehreren der Ansprüche 29 bis 31
dadurch gekennzeichnet,
daß sich die innenliegenden Messer (56) auf der vorderen Wand ( 53 ) der Sackaufgabe befinden.

33. Adsorbersystem nach Anspruch 32
dadurch gekennzeichnet,
daß die Messer den Sack ( 64 ) beim Nachinnenklappen der Kippvorrichtung ( 58 ) aufschlitzen, so daß das Adsorbens auslaufen kann.

34. Adsorbersystem nach einem oder mehreren der Ansprüche 29 bis 33
dadurch gekennzeichnet,
daß die Tür ( 60 ) durch umlaufende Dichtungen ( 43 ) nach dem Schließen abdichtet.

35. Adsorbersystem nach einem oder mehreren der Ansprüche 26 bis 34
dadurch gekennzeichnet,
daß im Abdeckblech ( 52 ) im Bereich der senkrechten Rohre ( 49 ), ( 50 ) und ( 51 ) Öffnungen ( 63 ) vorgesehen sind.

36. Adsorbersystem nach einem oder mehreren der Ansprüche 26 bis 35
dadurch gekennzeichnet,
daß sich unter dem über den gesamten Vorlagenquerschnitt reichende und an den Vorlagenwänden befestigte Abdeckblech ( 52 ) der Gassammelraum ( 29 ) bildet.

37. Adsorbersystem nach einem oder mehreren der Ansprüche 5 bis 36
dadurch gekennzeichnet,
daß der erweiterte Gassammelraum ( 30 ) bei senkrechten Rohren ( 49 ), ( 50 ) und ( 51 ) entfallen kann.

38. Adsorbersystem nach einem oder mehreren der Ansprüche 1 bis 37
dadurch gekennzeichnet,
daß das Adsorbersystem ( 1 ) rechteckige, quadratische und runde Querschnitte aufweisen kann.

39. Adsorbersystem nach einem oder mehreren der Ansprüche 1 bis 38
dadurch gekennzeichnet,
daß die Big Bags zum Befüllen und Entleeren staubdicht mit den Ein- und Auslaufschläuchen ( 61 ) und ( 62 ) an die Aufgabe ( 4 ) oder die Entleerung ( 12 ) angeschlossen werden.

40. Adsorbersystem nach einem oder mehreren der Ansprüche 1 bis 39
dadurch gekennzeichnet,
daß die Container zum Befüllen und Entleeren staubdicht mit flexiblen Manschetten ( 15 ) an die Aufgabe ( 5 ) oder die Entleerung ( 13 ) angeschlossen werden.

41. Adsorbersystem nach einem oder mehreren der Ansprüche 1 bis 40
dadurch gekennzeichnet,
daß bei Faßentleerung das Faß (14) mit flexiblen Manschetten (15) staubdicht an die Entleerung angeschlossen wird.

## Claims

1. An adsorber system (1) for cleansing gases or for drying bulk material, consisting of vertically arranged assemblies which are layered from the top to the bottom, which are connected to one another by sealed flange connections and which comprise
feeding means (3, 4, 5) for the adsorbent or the bulk material (23) respectively,
a bunker (6, 7, 8) having a degassing and recharging system (31),
an adsorber (2) having an adsorption bed and a discharging and gassing system (9, 10),
emptying means (11, 12, 13),
with the adsorbent or the bulk material (23) passing through the assemblies from the top to the bottom and with the gas (34) flowing through said assemblies in the form of a counter-flow from the bottom to the top, with the following additional characteristics:
a) the discharging and gassing base system (9, 10) is provided with at least two punched plates (38, 39) which form a discharging and gassing base system, which are arranged in parallel relative to one another and are movable in parallel relative to one another, which, at the top and bottom, are substantially planar and are positioned one on top of the other, and which are provided with corresponding punched-out patterns which substantially extend over the entire cross-section of the adsorber;
b) each punched-out pattern comprises first (large) holes (16) which are arranged in a grid and large enough to allow the passage of the adsorbent or the bulk material (24);
c) between each two adjoining first (large) holes (16) there is formed a group of two (small) holes (17) whose size is such that they prevent the passage of the adsorbent or the bulk material (24), but permit the passage of gas;
d) by displacing the punched plates (38, 39) relative to and in parallel to one another, the groups of small holes (17) of the one punched plate may be made to overlap with the large holes (16) of the other punched plate, so that, in said one displaced position of the punched plates, the downward passage of the adsorbent or the bulk material (24) is prevented, with the upward passage of the gas remaining unobstructed, whereas in all the other displaced positions of the punched plates (38, 39), it is possible for the adsorbent or the bulk material (24) to pass from the top to the bottom and for the gas (34) to pass from the bottom to the top.

2. An adsorber system according to claim 1,
characterised in
that there are provided two discharging and gassing base systems (9, 10) which are arranged one above the other and are each formed of two punched plates (38, 39), which discharging and gassing base systems, between them, form a lock chamber (20) in such a way that when the upper discharging and gassing base system (9) is opened as a result of a relative displacement between the punched plates (38, 39) of same, charged adsorbent or dried bulk material (24) is able to flow from the adsorber bed (21) downwards into the lock chamber (20) and that, after the lock chamber (20) has been filled in such a way, the upper discharging and gassing base system (9) is closed and that the lower, previously closed discharging and gassing base system (10) is opened as a result of a corresponding relative displacement between the punched plates (38, 39) of same, allowing the adsorbent or the bulk material (24) to flow from the lock chamber into the emptying means.

3. An adsorber system according to claim 1 or 2,
characterised in
that of the two punched plates (38, 39) of each discharging and gassing base sytem (9, 10), one is fixed relative to the remaining assembly and that only the other one is movable.

4. An adsorber system according to any one or several of claims 1 to 3,
characterised in
that between the adsorption bed (21) and the emptying means (11, 12, 13), there is arranged the discharging and gassing base system (9, 10).

5. An adsorber system according to any one or several of claims 1 to 4,
characterised in
that between the lower end of the bunker (6, 7, 8) and the adsorption bed, there is arranged the degassing and recharging system (31).

6. An adsorber system according to any one or several of claims 1 to 5,
characterised in
that the discharging and gassing base systems (9, 10) are formed by the carrier structures (19) consisting of intersecting flat steel elements.

7. An adsorber system according to any one or several of claims 1 to 6,
characterised in
that the degassing and recharging systems (31) are formed by alternating recharging shafts (25) for the adsorbent (23) and by the gas collecting chambers (29, 30) for the cleansed or moist gas (35).

8. An adsorber system according to any one or several of claims 1 to 7,
characterised in
that if the adsorbent (24) is discharged in layers, there is provided a lock chamber (20) between the upper discharging and gassing base system (9) and the lower discharging and basing base system (10).

9. An adsorber system according to any one or several of claims 1 to 8,
characterised in
that the large holes (16) are arranged in the direction of movement C-D in such a way that the hole width (e) is identical to the web width (e).

10. An adsorber system according to any one or several of claims 1 to 9,
characterised in
that if the adsorbent is discharged in layers by means of only one discharging and gassing base system (9, 10), the quantity of adsorbent to be discharged per cycle is determined by the opening time of the large holes (16).

11. An adsorber system according to any one or several of claims 3 to 10,
characterised in
that the fixed punched plates (38) are supported by carrier structures (19).

12. An adsorber system according to any one or several of claims 3 to 11,
characterised in
that in the case of the upper discharging and gassing base system (9), the movable punched plate (39), too, is supported by the carrier structure (19).

13. An adsorber system according to any one or several of claims 3 to 12,
characterised in
that the fixed punched plate (38) is secured to the carrier structure (19) by welding, riveting, bolting or similar methods.

14. An adsorber system according to any one or several of claims 1 to 13,
characterised in
that if the assemblies of the adsorber system (1) comprise round cross-sections, the large holes (16) in the punched plates (38, 39) are opened and closed by rotating the movable punched plate (39) around a vertical axis.

15. An adsorber system according to any one or several of claims 4 to 14,
characterised in
that underneath the carrier structure (19), there is arranged a movable punched plate.

16. An adsorber system according to any one or several of claims 4 to 15,
characterised in
that the large holes (16) in the carrier structure (19) with the pyramid-shaped hoods correspond to the large holes (16) in the movable punched plate (39).

17. An adsorber system according to any one or several of claims 5 to 16,
characterised in
that the cleansed gas or moist gas (35) from the adsorption bed or from the bulk material column (21) enters the gas collecting chambers (29) and (30) at the shaft end (28).

18. An adsorber system according to any one or several of claims 5 to 17,
characterised in
that the cleansed gas or moist gas (35) from the gas collecting chambers (29) leaves the adsorber system through the extended gas collecting chamber (30) and thereafter through the cleansed gas exit or moist gas exit (33).

19. An adsorber system according to any one or several of claims 1 to 18,
characterised in
that the degassing and recharging means (31) are positioned at the lower end of the bunker (6), (7) or (8).

20. An adsorber system according to any one or several of claims 1 to 19,
characterised in
that the degassing and recharging means (31) are formed by shafts (25) open at the top and by shafts (29) closed at the top.

21. An adsorber system according to any one of several of claims 5 to 20,
characterised in
that the recharging shafts (25), the separating wall (22) of the gas collecting chamber and the gas collecting chambers (29) are made of punched plate with small holes (17).

22. An adsorber system according to any one or several of claims 5 to 21,
characterised in
that the recharging shafts (25) are closed at the rear by the rear wall (54) of the bunker and, at the front, by the separating wall (22) of the gas collecting chamber.

23. An adsorber system according to any one or several of claims 1 to 19,
characterised in
that the separating wall (22) of the gas collecting chamber, towards the top, is connected to the front wall (53) of the bunker by an inclined, unpunched plate (40), thereby creating the extended gas colllecting chamber (30).

24. An adsorber system according to any one or several of claims 5 to 23,
characterised in
that apertures (63) are provided for the recharging shafts (25) in the separating wall (22) of the gas collecting chamber.

25. An adsorber system according to any one or several of claims 5 to 24,
characterised in
that the gas collecting chambers (29) can also be formed by horizontally positioned pipes (45), (46), (47) and (48).

26. An adsorber system according to any one or several of claims 1 to 25,
characterised in
that the degassing and recharging system (31) can also be formed by vertical tubes (46, 47, 48) and a cover plate (52).

27. An adsorber system according to claims 25 or 26,
characterised in
that the vertical tubes (46), (47) or (48), at their upper edges (50), are connected to a cover plate (52).

28. An adsorber system according to any one or several of claims 1 to 27,
characterised in
that, for charging purposes, the adsorbent feeding means (3), (4), and (5) are provided for being filled with different filled packaging units.

29. An adsorber system according to any one or several of claims 1 to 28,
characterised in
that, for the purpose of filling the bag feeding means (3), the door (60) is opened and the tilting device (58) is tilted outwardly.

30. An adsorber system according to claim 29,
characterised in
that, after having been loaded with a bag, the bag feeding means (3) are tilted inwardly in the direction F by a tilting device (58).

31. An adsorber system according to claim 29,
characterised in
that the base of the tilting device (58) is provided with slots.

32. An adsorber system according to any one or several of claims 29 to 31,
characterised in
that the inner blades (56) are positioned on the front wall (53) of the bag feeding means.

33. An adsorber system according to claim 32,
characterised in
that while the tilting device (58) tilts inwardly, the blades slit the bag (64) open, thus allowing the adsorbent to run out.

34. An adsorber system according to any one or several of claims 29 to 33,
characterised in
that, after having been closed, the door (60) is sealed by continuous seals (43).

35. An adsorber system according to any one or several of claims 26 to 34,
characterised in
that, in the region of the vertical tubes (49), (50) and (51), the cover plate (52) is provided with openings (63).

36. An adsorber system according to any one or several of claims 26 to 35,
characterised in
that the gas collecting chamber (29) is formed underneath the cover plate (52) which extends over the entire cross-section of the bunker and is secured to the bunker walls.

37. An adsorber system according to any one or several of claims 5 to 36,
characterised in
that if there are provided vertical tubes (49), (50) and (51), the extended gas collecting chamber (30) can be eliminated.

38. An adsorber system according to any one or several of claims 1 to 37,
characterised in
that the adsorber system (1) may comprise rectangular, square and round cross-sections.

39. An adsorber system according to any one or several of claims 1 to 38,
characterised in
that, for filling and emptying purposes, the big bags are connected in a dust-proof way to the feeding means (4) or emptying means (12) by means of the inlet and outlet hoses (61).

40. An adsorber system according to any one or several of claims 1 to 39,
characterised in
that, for filling and emptying purposes, the containers are connected in a dust-proof way to the feeding means (5) or emptying means (13) by flexible sleeves (15).

41. An adsorber system according to any one of claims 1 to 40,
characterised in
that, while being emptied, the barrel (14) is connected in a dust-proof way to the emptying means by flexible sleeves (15).

## Revendications

1. Système adsorbant (1) destiné au nettoyage de gaz ou au séchage de matière déversée, comprenant les composants suivants, superposés en agencement vertical du haut vers le bas et reliés les uns aux autres par des liaisons à brides étanches :
- alimentation (3, 4, 5) du produit adsorbant ou de la matière déversée (23),
- collecteur (6, 7, 8) avec système de dégazage et de ré-alimentation (31),
- dispositif adsorbant (2) avec lit d'adsorption et système d'évacuation et d'alimentation des gaz (9, 10), et
- vidange (11, 12, 13),
dans lequel le produit adsorbant ou la matière déversée (23) traverse l'agencement des composants depuis le haut vers le bas et le gaz (34) traverse cet agencement à contre-courant depuis le bas vers le haut, comprenant les caractéristiques supplémentaires :
a) le système à fond d'évacuation et d'alimentation des gaz (9, 10) est pourvu d'au moins deux plaques perforées (38, 39) superposées et de surfaces sensiblement égales, formant un système à fond d'évacuation et d'alimentation des gaz, qui sont agencées parallèlement l'une à l'autre et sont mobiles parallèlement l'une par rapport à l'autre, lesdites plaques perforées étant pourvues de motifs perforés de même étendue, qui s'étendent sensiblement sur la totalité de la section transversale d'adsorption,
b) chaque motif perforé comporte des premières perforations (grandes perforations) (16) agencées suivant un réseau, qui sont d'une telle taille qu'elles permettent le passage du produit adsorbant ou de la matière déversée (24) ;
c) entre deux premières perforations successives (grandes perforations) (16) est réalisé un groupe de secondes perforations (petites perforations) (17) dont la taille est telle qu'elles empêchent le passage du produit adsorbant ou de la matière déversée (24), mais permettent le passage du gaz ;
d) par déplacement des plaques perforées (38, 39) l'une par rapport à l'autre et parallèlement l'une à l'autre, les groupes de petites perforations (17) de l'une des plaques perforées peuvent être amenés en chevauchement avec les grandes perforations (16) de l'autre plaque perforée, de sorte que dans cette position déplacée des plaques perforées, le passage du produit adsorbant ou de la matière déversée (24) est empêché, cependant que la traversée du gaz vers le haut n'est pas entravée, tandis que dans toutes les autres positions déplacées des plaques perforées (38, 39) tant le produit adsorbant que la matière déversée (24) peuvent passer du haut vers le bas, tout comme le gaz (34) peut passer du bas vers le haut.

2. Système adsorbant selon la revendication 1, comprenant les caractéristiques supplémentaires qu'il est prévu deux systèmes à fond d'évacuation et d'alimentation des gaz (9, 10), formés par deux plaques perforées (38, 39), qui forment entre elles une chambre de sas (20), de manière que lors de l'ouverture du système supérieur à fond d'évacuation et d'alimentation des gaz (9) par déplacement relatif correspondant de ses plaques perforées (38, 39) le produit adsorbant chargé, ou la matière déversée sèche (24), peut s'écouler depuis le lit d'adsorption (21) vers le bas jusque dans la chambre de sas (20), et qu'après le remplissage ainsi réalisé de la chambre de sas (20) le système supérieur à fond d'évacuation et d'alimentation des gaz (9) est fermé, et le système inférieur à fond d'évacuation et d'alimentation des gaz (10), précédemment fermé, est ouvert par déplacement relatif correspondant de ses plaques perforées (38, 39), et le produit adsorbant ou la matière déversée (24) peut s'écouler hors de la chambre de sas dans la vidange.

3. Système adsorbant selon l'une ou l'autre des revendications 1 et 2, comportant les caractéristiques supplémentaires que, parmi les deux plaques perforées (38, 39) de chaque système à fond d'évacuation et d'alimentation des gaz (9, 10) l'une est fixe par rapport au reste de l'agencement, et seule l'autre est mobile.

4. Système adsorbant selon l'une ou plusieurs des revendications 1 à 3, caractérisé en ce que le système à fond d'évacuation et d'alimentation des gaz (9, 10) est agencé entre le lit d'absorption (21) et la vidange (11, 12, 13).

5. Système adsorbant selon l'une ou plusieurs des revendications 1 à 4, caractérisé en ce que le système de dégazage et de ré-alimentation (31) est situé entre l'extrémité inférieure du collecteur (6, 7, 8) et le lit d'adsorption.

6. Système adsorbant selon l'une ou plusieurs des revendications 1 à 5, caractérisé en ce que les systèmes à fond d'évacuation et d'alimentation des gaz (9, 10) sont formés par des aciers plats qui se croisent en partant de la structure porteuse (19).

7. Système adsorbant selon l'une ou plusieurs des revendications 1 à 6, caractérisé en ce que les systèmes de dégazage et de ré-alimentation (31) sont formés par des puits de ré-alimentation (25) agencés en alternance pour le produit adsorbant (23), pour les chambres de collecte du gaz (29, 30), pour le gaz pur ou le gaz humide (35).

8. Système adsorbant selon l'une ou plusieurs des revendications 1 à 7, caractérisé en ce que, lors d'une évacuation couche par couche du produit adsorbant (24) il est prévu une chambre de sas (20) entre le système supérieur à fond d'évacuation et d'alimentation des gaz (9) et le système inférieur à fond d'évacuation et d'alimentation des gaz (10).

9. Système adsorbant selon l'une ou plusieurs des revendications 1 à 8, caractérisé en ce que les grandes perforations (16) sont agencées dans la direction de déplacement C-D, de telle manière que la largeur des perforations (e) est égale à la largeur des barrettes (e).

10. Système adsorbant selon l'une ou plusieurs des revendications 1 à 9, caractérisé en ce que, dans le cas d'une évacuation couche par couche du produit adsorbant avec un seul système à fond d'évacuation et d'alimentation des gaz (9, 10), la quantité de produit adsorbant à évacuer par cycle est déterminée par la durée d'ouverture des grandes perforations (16).

11. Système adsorbant selon l'une ou plusieurs des revendications 3 à 10, caractérisé en ce que les plaques perforées fixes (38) sont supportées par une structure porteuse (19).

12. Système adsorbant selon l'une ou plusieurs des revendications 3 à 11, caractérisé en ce que, dans le système supérieur à fond d'évacuation et d'alimentation du gaz (9), la plaque perforée mobile (39) est également supportée par la structure porteuse (19).

13. Système adsorbant selon l'une ou plusieurs des revendications 3 à 12, caractérisé en ce que la plaque perforée fixe (38) est fixée sur la structure porteuse (19) par soudure, rivetage, vissage ou similaire.

14. Système adsorbant selon l'une ou plusieurs des revendications 1 à 13, caractérisé en ce que lorsque les composants du système adsorbant (1) ont des sections rondes, l'ouverture et la fermeture des grandes perforations (16) dans les plaques perforées (38, 39) se produit par rotation de la plaque perforée mobile (39) autour d'un axe vertical.

15. Système adsorbant selon l'une ou plusieurs des revendications 4 à 14, caractérisé en ce qu'il est prévu une plaque perforée mobile au-dessous de la structure porteuse (19).

16. Système adsorbant selon l'une ou plusieurs des revendications 4 à 15, caractérisé en ce que les grandes perforations (16) dans la structure porteuse (19) avec des capots de forme pyramidale sont d'étendue identique avec les grandes perforations (16) dans la plaque perforée mobile (39).

17. Système adsorbant selon l'une ou plusieurs des revendications 5 à 16, caractérisé en ce que le gaz pur ou le gaz humide (35) provenant du lit d'adsorption ou de la colonne de matière déversée (21) pénètre à l'extrémité du puits (28) dans les chambres de collecte de gaz (29) et (30).

18. Système adsorbant selon l'une ou plusieurs des revendications 5 à 17, caractérisé en ce que le gaz pur ou le gaz humide (35) provenant des chambres de collecte de gaz (29) quitte le système adsorbant via la chambre élargie de collecte de gaz (30) et ensuite via la sortie de gaz pur ou la sortie de gaz humide (33).

19. Système adsorbant selon l'une ou plusieurs des revendications 1 à 18, caractérisé en ce que le dégazage et la ré-alimentation (31) se trouvent à l'extrémité inférieure du collecteur (6), (7) ou (8).

20. Système adsorbant selon l'une ou plusieurs des revendications 1 à 19, caractérisé en ce que le dégazage et la ré-alimentation (31) sont formés par des puits ouverts depuis le haut (25) et des puits fermés depuis le haut (29).

21. Système adsorbant selon l'une ou plusieurs des revendications 5 à 20, caractérisé en ce que les puits de ré-alimentation (25), la paroi de séparation des chambres de collecte de gaz (22), et les chambres de collecte de gaz (29) sont réalisés sous forme de plaques perforées avec des petites perforations (17).

22. Système adsorbant selon l'une ou plusieurs des revendications 5 à 21, caractérisé en ce que les puits de ré-alimentation (25) sont fermés à l'arrière par la paroi postérieure de collecteur (54) et à l'avant par la paroi de séparation des chambres de collecte de gaz (22).

23. Système adsorbant selon l'une ou plusieurs des revendications 1 à 19, caractérisé en ce que la paroi de séparation des chambres de collecte de gaz (22) est reliée à la paroi avant (53) du collecteur vers le haut par une plaque inclinée et non perforée (40), et qu'il en résulte ainsi la chambre de collecte de gaz élargie (30).

24. Système adsorbant selon l'une ou plusieurs des revendications 5 à 23, caractérisé en ce que pour les puits de ré-alimentation (25) il est prévu des ouvertures (63) dans la paroi de séparation (22) des chambres de collecte de gaz.

25. Système adsorbant selon l'une ou plusieurs des revendications 5 à 24, caractérisé en ce que les chambres de collecte de gaz (29) sont susceptibles d'être formées par des tubes disposés horizontalement (45), (46), (47) et (48).

26. Système adsorbant selon l'une ou plusieurs des revendications 1 à 25, caractérisé en ce que le système de dégazage et de ré-alimentation (31) est également susceptible d'être réalisé par des tubes verticaux (46, 47, 48) et par une plaque de couverture (52).

27. Système adsorbant selon l'une ou l'autre des revendications 25 et 26, caractérisé en ce que les tubes verticaux (46), (47) ou (48) sont reliés à la bordure supérieure (50) avec une plaque de couverture (52).

28. Système adsorbant selon l'une ou plusieurs des revendications 1 à 27, caractérisé en ce que les alimentations de produit adsorbant (3), (4) et (5) sont équipées pour être chargées avec différents récipients.

29. Système adsorbant selon l'une ou plusieurs des revendications 1 à 28, caractérisé en ce que pour le remplissage de l'alimentation en sac (3) on ouvre la porte (60) et on bascule le dispositif basculant (58) vers l'extérieur.

30. Système adsorbant selon la revendication 29, caractérisé en ce que l'alimentation en sac (3) est basculée, après le chargement avec un sac. au moyen d'un dispositif basculant (58) vers l'intérieur dans la direction F.

31. Système adsorbant selon la revendication 29, caractérisé en ce qu'il est prévu des fentes dans le fond du dispositif basculant (58).

32. Système adsorbant selon l'une ou plusieurs des revendications 29 à 31, caractérisé en ce que des couteaux intérieurs (56) sont situés sur la paroi antérieure (53) de l'alimentation en sac.

33. Système adsorbant selon la revendication 32, caractérisé en ce que les couteaux fendent le sac (64) lors du basculement vers l'intérieur du dispositif basculant (58), de sorte que le produit adsorbant peut s'écouler.

34. Système adsorbant selon l'une ou plusieurs des revendications 29 à 33, caractérisé en ce que la porte (60) est étanchée après la fermeture par des joints périphériques (43).

35. Système adsorbant selon l'une ou plusieurs des revendications 26 à 34, caractérisé en ce que des ouvertures (63) sont prévues dans la plaque de couverture (52) dans la région des tubes verticaux (49), (50) et (51).

36. Système adsorbant selon l'une ou plusieurs des revendications 26 à 35, caractérisé en ce que la chambre de collecte de gaz (29) se forme au-dessous de la plaque de couverture (52) qui s'étend sur la totalité de la section du collecteur et qui est fixée aux parois du collecteur.

37. Système adsorbant selon l'une ou plusieurs des revendications 5 à 36, caractérisé en ce que la chambre de collecte de gaz élargie (30) peut être omise dans le cas de tubes verticaux (49), (50) et (51).

38. Système adsorbant selon l'une ou plusieurs des revendications 1 à 37, caractérisé en ce que le système adsorbant (1) peut présenter des sections rectangulaires, carrées ou rondes.

39. Système adsorbant selon l'une ou plusieurs des revendications 1 à 38, caractérisé en ce que les sacs de grande taille ("big bags") sont raccordés à l'alimentation (4) ou à la vidange (12) pour le remplissage ou le vidage, de manière étanche vis-à-vis des poussières avec les tubes d'entrée et de sortie (61) et (62).

40. Système adsorbant selon l'une ou plusieurs des revendications 1 à 39, caractérisé en ce que les récipients sont raccordés à l'alimentation (5) ou à la vidange (13) pour le remplissage ou le vidage, de manière étanche vis-à-vis des poussières à l'aide de manchettes souples (15).

41. Système adsorbant selon l'une ou plusieurs des revendications 1 à 40, caractérisé en ce que dans le cas du vidage de fûts, le fût (14) est relié à la vidange de façon étanche aux gaz au moyen de manchettes souples (15).
